# EUROPÄISCHE PATENTANMELDUNG

(11) **EP 4 745 049 A1**
(43) Veröffentlichungstag der Anmeldung: **20.05.2026**
(21) Anmeldenummer: 25213546.2
(22) Anmeldetag: 05.11.2025
(51) Int. Cl.: B65B 35/04, B65B 35/16, B65B 35/24, B65B 57/14, B65B 65/00, B25J 9/00, B65B 9/04, B65B 11/52, B65B 25/06, B65G 21/14, B65G 47/90

(54) **TRANSFERSYSTEM FÜR EINE VERPACKUNGSMASCHINE SOWIE VERFAHREN**

(30) Priorität: 19.11.2024 DE 102024133880
(71) Anmelder: MULTIVAC Sepp Haggenmüller SE & Co. KG, 87787 Wolfertschwenden (DE)
(72) Erfinder: EISENACH, Kai, 35083 Wetter (DE)
(74) Vertreter: Grünecker Patent- und Rechtsanwälte PartG mbB

(57) **Zusammenfassung**

Transfersystem (11, 11') für eine Verpackungsmaschine (1), wobei das Transfersystem (11, 11') mindestens einen Roboter (12), der zum Einlegen von Produkten (P) in entlang der Verpackungsmaschine (1) bereitgestellte Verpackungsunterteile (M, S) konfiguriert ist, sowie mindestens ein für den Roboter (12) erreichbares Pufferband (14) aufweist, auf welchem mittels des Roboters (12) Produkte (P) ablegbar sind, wobei das Pufferband (14) zum Einlegen von darauf mittels des Roboters (12) abgelegten Produkten (P) in entlang der Verpackungsmaschine (1) bereitgestellte Verpackungsunterteile (M, S) konfiguriert ist.

## Beschreibung

Die vorliegende Erfindung bezieht sich auf ein Transfersystem gemäß Anspruch 1. Ferner betrifft die Erfindung ein Verfahren gemäß dem unabhängigen Anspruch 14.

DE 102 01 182 A1 offenbart ein Positioniersystem mit einem Förderband, das zum Ablegen von Produkten auf eine Ablage konfiguriert ist. Das Förderband ist als Rückzugsband, in Fachkreisen Pullnose-Band genannt, ausgebildet und ist derart positioniert, dass dessen Transport- bzw. Rückzugsrichtung senkrecht zu einer Transportrichtung der Ablage verläuft, sodass eine Querzuführung mittels des Förderbands auf die Ablage geschieht. Eine derartige Querzuführung nimmt allerdings viel Platz in Anspruch.

In der Praxis werden als Transfersysteme zum Beladen von Verpackungsuntereilen mit Produkten auch Pickerlinien mit einem Picker sowie einem integrierten Puffer eingesetzt, wodurch sich ein Leistungsvorteil gegenüber Pickerlinien ohne Puffer erzielen lässt. Pickerlinien mit integriertem Puffer können insgesamt bauraumreduzierter ausgebildet werden als Pickerlinien, die aus einem externen Puffer mit darin zwischengespeicherten Produkten versorgt werden können.

Bei herkömmlichen Pickerlinien mit integriertem Puffer werden integrierte Pufferplätze oder Pufferbänder in Reichweite des Pickers, der beispielsweise in Form eines Deltaroboters vorliegt, verwendet. Zugeführte Produkte bzw. Portionen, die nicht direkt mittels des Pickers in Verpackungen eingelegt werden können, bilden einen sogenannten Overflow, der sich anhand des Pickers in den bereitgestellten Puffer transportieren lässt. Damit kann verhindert werden, dass bei normalem oder erhöhtem Produkteinlauf die Produktzufuhr angehalten werden muss, was ggf. zu unerwünschten Rückstaueffekten im Betrieb von stromaufwärts positionierten Maschinen, beispielsweise an einer Schneidmaschine, führen kann. Bei minimiertem Produkteinlauf stehen dann die im Puffer zwischengespeicherten Produkte bzw. Portionen zur Verfügung und können mittels des Pickers erneut aufgenommen, sprich aus dem Puffer abgeholt und in die bereitgestellten Packungen eingelegt werden, damit es am Produktauslauf zu keinen Verzögerungen kommt. An derartigen Pickerlinien wird ausschließlich ein Picker zum Einlegen der zugeführten bzw. zwischengespeicherten Produkte in bereitgestellte Verpackungsunterteile eingesetzt.

Dadurch, dass der Picker bei bekannten Pickerlinien zum Ablegen von Produkten in den Puffer und durch eine gesonderte Pickerbewegung auch noch zum Einlegen der gepufferten Produkte in Verpackungen eingesetzt wird, werden für diese Zwecke pro Produkt jeweils zwei Picks vom Picker durchgeführt. Der erste Pick, um das Produkt im Puffer abzulegen, und der zweite Pick, um das gepufferte Produkt später in eine zur Verfügung gestellte Verpackung einzulegen. Demzufolge reduziert sich die Verfügbarkeit des Pickers am Produkteinlauf, um die zugeführten Produkte direkt in Verpackungsunterteile einzulegen. Deshalb kann es am Produkteinlauf dazu kommen, dass die dort ankommenden Produkte verzögert vom Picker aufgenommen und in Verpackungsunterteile ein- bzw. auf das Pufferband abgelegt werden, wodurch auch der vorausgehende Transport bzw. Betrieb anderer stromaufwärts positionierter Maschinen abgebremst werden kann. Die Problematik kann sich bereits bei einem normalen und erst recht bei einem erhöhten Produkteinlauf ergeben.

Aufgabe der Erfindung ist es, ein Transfersystem sowie ein Verfahren zur Verfügung zu stellen, womit sich das Einlegen von zugeführten Produkten in bereitgestellte Verpackungsunterteile besser, insbesondere kontinuierlicher durchführen lässt.

Diese Aufgabe wird gelöst anhand eines Transfersystems nach Anspruch 1 sowie mittels eines Verfahrens gemäß dem unabhängigen Anspruch 14.

Vorteilhafte Weiterbildungen der Erfindung sind durch die jeweiligen Gegenstände der Unteransprüche gegeben.

Die Erfindung bezieht sich auf ein Transfersystem für eine Verpackungsmaschine, wobei das Transfersystem mindestens einen Roboter, der zum Einlegen von Produkten in entlang der Verpackungsmaschine bereitgestellte Verpackungsunterteile konfiguriert ist, sowie mindestens ein für den Roboter erreichbares Pufferband aufweist, auf welchem mittels des Roboters Produkte ablegbar sind. Die Erfindung sieht vor, dass das Pufferband zum Einlegen von darauf mittels des Roboters abgelegten Produkten in entlang der Verpackungsmaschine bereitgestellte Verpackungsunterteile konfiguriert ist.

Das erfindungsgemäße Pufferband steht damit neben seiner eigentlichen Pufferfunktion auch als Einlegeband zur Verfügung. Das Pufferband der Erfindung liegt somit als Puffereinlegeband vor. Mithin erfüllt das erfindungsgemäße Pufferband eine Doppelfunktion, indem es sowohl zum Zwischenspeichern darauf mittels des Roboters abgelegter Produkte als auch zum Einlegen der darauf mittels des Roboters abgelegten, zwischengespeicherten Produkte in bereitgestellte Verpackungsunterteile zum Einsatz kommt. Dies bedeutet, dass der Roboter nicht mehr, und wenn überhaupt nur noch in Ausnahmefällen, dafür benötigt wird, die auf dem Pufferband zwischengespeicherten Produkte erneut aufzunehmen, um sie in Verpackungen einzulegen.

Das erfindungsgemäße Pufferband bildet ein kostengünstiges Mittel zum Einlegen von Produkten in Verpackungsunterteile. In Kombination mit dem Roboter ergibt sich vor allen Dingen ein für das Puffern sowie den Transfer der Produkte wirtschaftlicher, sowie bauraumreduzierter Aufbau.

Dadurch, dass das Einlegen der Produkte in die bereitgestellten Verpackungsunterteile durch den Roboter und das Pufferband geschieht, nimmt die Verfügbarkeit bzw. die Arbeitsbereitschaft des Roboters am Produkteinlauf zu, sodass sich die dort ankommenden Produkte durch ihn schneller abholen, insbesondere kontinuierlicher verarbeiten lassen, d.h. zügiger entweder direkt in bereitgestellte Verpackungsunterteile einlegen oder auf dem Pufferband ablegen lassen.

Der erfindungsgemäße Roboter konzentriert sich somit auf das Aufnehmen und Einlegen von ihm zugeführten Produkten in Verpackungsschalen sowie auf das Aufnehmen und Ablegen von ihm zugeführten Produkten auf das Pufferband. Für diese Zwecke werden alle Produkte jeweils nur durch einen Roboter-Pick transferiert, unabhängig davon, ob sie direkt in die Verpackungsunterteile eingelegt oder vorerst auf dem Pufferband abgelegt werden. Zum Einlegen von auf dem Pufferband zwischengespeicherter Produkte in Verpackungsunterteile wird der Roboter nicht mehr benötigt. Dies erledigt nämlich, ggf. von wenigen Ausnahmefällen abgesehen, das erfindungsgemäße Pufferband selbst. Somit ist der Roboter auch besser dazu bereit, neue, im Produkteinlauf eintreffende Produkte bzw. Portionen direkt in bereitgestellte Verpackungsunterteile einzulegen. In anderen Worten kommt es am Produkteinlauf weniger oft zu einem Stopp in der Produktzufuhr. Die vorliegende Erfindung begünstigt somit die Arbeitsweise des Roboters, da das Einlegen gepufferter Produkte unabhängig vom Einlaufstrom mittels des Pufferbands durchgeführt werden kann.

Aufgrund der Tatsache, dass bei der Erfindung sowohl der Roboter als auch das Pufferband zum Einlegen von Produkten in die entlang der Verpackungsmaschine bereitgestellten Verpackungsunterteile eingesetzt werden, können sogar bei Bedarf mehrere Produkte gleichzeitig in Verpackungsunterteile eingelegt werden, sodass es insbesondere besser möglich ist, dass sich die entlang der Verpackungsmaschine bereitgestellten Verpackungsschalen, insbesondere ein vorbestimmtes Format an Verpackungsunterteilen, gemäß einem voreingestellten bzw. adaptiven Maschinenarbeitstakt mit Produkt beladen lassen. Davon profitiert einerseits die zum Herstellen von Verpackungen konfigurierte Verpackungsmaschine, da sie unterbrechungsfrei gemäß dem Maschinenarbeitstakt Verpackungen herstellen kann. Andererseits kann auch eine stromaufwärts des Transfersystems positionierte Einrichtung für den Transport der Produkte bzw. zum Herstellen geschnittener Produkte bzw. Portionen, beispielsweise ein Slicer, aufgrund des kontinuierlicheren Transfers von Produkten durch das Transfersystem ebenfalls kontinuierlicher Arbeiten, sodass sich auch hier Stillstandzeiten reduzieren lassen.

Vorzugsweise ist das Pufferband als Einlegeband oberhalb einer Einlegestrecke der Verpackungsmaschine angeordnet. Das Transfersystem liegt sozusagen teilweise in einem Arbeitsbereich der Verpackungsmaschine. Dies begünstigt einen bauraumreduzierten Aufbau des Transfersystems, weil sich dadurch aus der Draufsicht die an der Verpackungsmaschine vorhandene Einlegestrecke zumindest abschnittweise mit dem darüber positionierten Pufferband des Transfersystems überschneidet.

Denkbar wäre es, dass das Pufferband an einem Maschinenrahmen der Verpackungsmaschine befestigbar ist, um eine vorbestimmte Lage oberhalb der Einlegestrecke einzunehmen. Eine Ausrichtung des Pufferbands kann insbesondere längs zur Einlegestrecke gewählt sein, dass anhand des Pufferbands eine Längszuführung von Produkten hinsichtlich einer Produktionsrichtung der Verpackungsmaschine in die entlang der Einlegestrecke bereitgestellten Verpackungsunterteile möglich ist.

Eine vorteilhafte Ausführungsform der Erfindung sieht vor, dass das Pufferband anhand eines pneumatischen Hubantriebs, mittels eines Elektromotors oder mittels eines Servomotors zum Einlegen von Produkten antreibbar ist. Damit lassen sich die auf dem Pufferband zwischengespeicherten Produkte präzise in die bereitgestellten Verpackungsunterteile einlegen. Ein derartiger Antrieb kann insbesondere synchron zu einer Transporteinrichtung der Verpackungsmaschine, beispielsweise synchron zu daran antreibbar gelagerten Transportketten, angesteuert werden, um darauf abgelegte Produkte während einer Vorschubbewegung der Verpackungsunterteile in diese einzulegen.

Insbesondere ist es möglich, dass das Pufferband synchron zu einer Vorschubbewegung der Verpackungsmaschine zum Einlegen zwischengespeicherter Produkte und/oder der Roboter bei anhaltender Vorschubbewegung der Verpackungsmaschine zum Einlegen zugeführter Produkte ansteuerbar ist. Damit wäre es denkbar, dass sich Produkte sowohl in ruhende Verpackungsschalen, insbesondere mittels des Roboters, als auch in bewegte Verpackungsschalen, insbesondere mittels des Pufferbands, einlegen lassen. Damit kann die Einlegerate erhöht werden.

Gemäß einer Ausführungsform der Erfindung ist das Pufferband dazu ausgebildet, die mittels des Roboters darauf abgelegten Produkte innerhalb und/oder außerhalb einer Reichweite des Roboters in Verpackungsschalen einzulegen. Das Pufferband könnte für diese Zwecke als ein in und/oder entgegen der Produktionsrichtung der Verpackungsmaschine antreibbares Pufferband ausgebildet sein.

Ein Variante sieht vor, dass das Pufferband als solches relativ zum Roboter verschiebbar angeordnet ist. Diese Funktion könnte beispielsweise dafür genutzt werden, um dem Roboter gezielt Platz zum direkten Einlegen von Produkten freizugeben, beispielsweise wenn die Pufferfunktion zumindest temporär nicht benötigt wird, d.h. bei ausbleibendem Overflow. Insbesondere kann diese Funktion dafür genutzt werden, um eine Erreichbarkeit des Pufferbands für den Roboter zu variieren, sprich eine Anzahl der anhand des Roboters zu erreichenden Pufferbandplätze zum Ablegen von Produkten zu variieren. Beispielsweise liese sich das Pufferband zum Erhöhen von für den Roboter erreichbaren Pufferbandplätzen zunehmend in eine Reichweite des Roboters hinein verlagern, um einen Overflow an Produkten aufnehmen zu können. Dagegen liese sich das Pufferband zum Reduzieren von für den Roboter erreichbaren Pufferbandplätzen zunehmend aus der Reichweite des Roboters heraus verlagern, um dem Roboter zusätzlich Platz für ein direktes Einlegen von Produkten freizugeben.

Vorzugsweise ist das Pufferband als solches aus einer Reichweite des Roboters heraus verschiebbar angeordnet bzw. verfahrbar. Damit kann das Pufferband als Einheit vollständig aus einem Arbeitsbereich des Roboters heraus verstellt werden bzw. herausfahren, damit zumindest temporär der Roboter allein zum direkten Einlegen der ihm zugeführten Produkte eingesetzt wird. Ein derartiges Szenario wäre bspw. dann von Vorteil, wenn erfasst wird, dass aufgrund einer zu geringen Produktzufuhr am Produkteinlauf des Transfersystems das Puffern von Produkten keinen Sinn ergibt bzw. sich die zugeführten Produkte schneller direkt durch alleinigen Einsatz des Roboters in die Verpackungsunterteile verladen lassen. Das Herausbewegen des Pufferbands aus einer Reichweite des Roboters kann deshalb dafür genutzt werden, um dem Roboter seinen maximalen Arbeitsbereich zum direkten Einlegen von Produkten freizugeben.

Gemäß einer Ausführungsform verfügt das Pufferband über einen Linearantrieb, anhand dessen es sich relativ zum Roboter verstellen lässt. Denkbar wäre ein servomotorisch gesteuerter Linearantrieb, um das Pufferband präzise relativ zum Roboter positionieren zu können. Zweckmäßigerweise könnte eine Führung für den Linearantrieb durch das Maschinengestell der Verpackungsmaschine gebildet sein.

Sinnvoll wäre es, dass eine Positionierung des Pufferbands relativ zum Roboter in Abhängigkeit einer erfassten Produktzufuhrmenge steuerbar bzw. regelbar ist. Beim Erfassen einer derart großen Menge an zugeführten Produkten für deren Verarbeitung nicht ausreichend viele Verpackungsunterteile zur Verfügung stehen, könnte beispielsweise das Pufferband in Reichweite des Roboters positioniert werden, um darauf einen Puffer aufbauen zu können. Bei geringer werdender Produktzufuhr könnte der Roboter alleinig zum Verladen der Produkte eingesetzt werden, sprich das Pufferband könnte beispielsweise teilweise oder ganz aus der Reichweite des Roboters heraus bewegt werden. Bei einer Unterbrechung der Produktzufuhr ins Transfersystem, weil beispielsweise eine stromaufwärts positionierte Schneidmaschine neu mit einem zu schneidenden Produkt beladen werden muss, kann der Puffer abgebaut werden, indem das Pufferband an die Stelle bzw. die Stellen nicht beladener Verpackungsunterteile verfährt, um die darauf zwischengespeicherten Produkte in die leeren Verpackungsunterteile einzulegen.

Vorzugsweise hängt ein Verhältnis der pro Maschinenarbeitstakt der Verpackungsmaschine mittels des Roboters und mittels des Pufferbands eingelegten Produkte von einer erfassten Produktzufuhrmenge an Produkten in das Transfersystem ab.

Eine Variante sieht vor, dass der Roboter als Delta-Roboter ausgebildet ist. Dieser, in Fachkreisen auch Picker genannt, lässt sich hervorragend zum Aufnehmen und Einlegen von Produkten breitgestellte Verpackungsunterteile einsetzen, selbst für den Fall, dass die Produkte unregelmäßig zur Verfügung gestellt werden. Außerdem bietet die Stabkinematik eines Delta-Roboters zum Verladen von Lebensmittelprodukten einen hygienischen Betrieb.

Vorzugsweise weist das Transfersystem für den Roboter mindestens eine Produktzuführung, die insbesondere in Form eines Zuführbands vorliegt, auf. Von dieser lassen sich die Produkte einfach mittels des Roboters aufnehmen und in die bereitgestellten Verpackungsunterteile transferieren bzw. auf das Pufferband ablegen. Die Produktzuführung kann parallel zu einer Einlegestrecke der Verpackungsmaschine verlaufen, sodass eine Übergabe der Produkte von dem Transfersystem in die Verpackungsmaschine auf engem Bauraum möglich ist.

Gemäß einer Ausführungsform verfügt das Transfersystem über mindestens ein Visionsystem, das der Produktzuführung zugeordnet ist, um darauf transportierte Produkte erfassen zu können. Auf Basis einer mittels des Visionsystems erfassten Produktzufuhrmenge kann insbesondere ein Betrieb des Roboters gesteuert werden. Vorzugsweise kann in Abhängigkeit der erfassten Produktzufuhrmenge eine Zusammenarbeit des Roboters mit dem Pufferband, beispielsweise eine Positionierung des Pufferbands relativ zum Roboter, variieren.

Vorzugsweise ist das Zuführband unmittelbar neben der Verpackungsmaschine, insbesondere unmittelbar neben einer daran ausgebildeten Einlegestrecke und parallel zu dieser, positioniert, damit der Roboter kurze Verstellwege zwischen dem Zuführband und der Einlegestrecke zurückzulegen hat, um Produkte einzulegen.

Eine Variante sieht vor, dass das Zuführband als Einlegeband ansteuerbar ist, um selbst Produkte in Verpackungsunterteile einzulegen. Bei dieser Variante könnte deshalb der Roboter, das Pufferband sowie das Zuführband zum Einlegen von Produkten in bereitgestellte Verpackungsunterteile genutzt werden. Hierfür könnte ein der Verpackungsmaschine zugewandtes Ende des Zuführbands oberhalb der Einlegestrecke positioniert sein, um Produkte in entlang der Einlegestrecke bereitgestellte Verpackungsunterteile einzulegen.

Gemäß einer Ausführungsform ist vorgesehen, dass das Pufferband ein Rückzugsband oder ein Förderband ist. In einer bevorzugten Variante kann das Pufferband als Rückzugsband und als Förderband genutzt werden, um Produkte in Verpackungsunterteile einzulegen. Als Förderband ist das Pufferband insbesondere synchron zu einer Vorschubbewegung der Verpackungsmaschine in Produktionsrichtung der Verpackungsmaschine antreibbar, um darauf abgelegte Produkte während der Vorschubbewegung der Verpackungsmaschine in entlang der Verpackungsmaschine bewegte Verpackungsunterteile einzulegen. Ist das Pufferband als Rückzugsband konfiguriert, kann das Rückzugsband insbesondere längs zu einer Produktionsrichtung der Verpackungsmaschine ein- und ausfahrbar sein.

Gemäß einer Variante ist insbesondere vorgesehen, dass das Pufferband in Form eines Rückzugsbands ein in Produktionsrichtung der Verpackungsmaschine einfahrbares Ende aufweist. Damit lassen sich die Produkte sanft in die darunter bereitgestellten Verpackungsunterteile einlegen.

Vorzugsweise ist das Rückzugsband als doppelseitiges Rückzugsband mit gegenüberliegenden ein- und ausfahrbaren Enden konfiguriert. Ein solches Rückzugsband kann den Picker beim Einlegen von Produkten in die bereitgestellten Verpackungsunterteile zusätzlich unterstützen.

Ein Variante sieht vor, dass das Pufferband mehrere unabhängig voneinander ansteuerbare Pufferbandspuren aufweist. Damit lassen sich jeweilige in Produktionsrichtung verlaufende Spuren aus entlang der Einlegestrecke bereitgestellten Verpackungsunterteilen unabhängig voneinander mit Produkten befüllen.

Bevorzugterweise ist das Pufferband und/oder das Zuführband dazu ansteuerbar, mehrere Produkte gleichzeitig in Verpackungsunterteile einzulegen, insbesondere mehrere Produkte entsprechend einer quer zur Produktionsrichtung der Verpackungsmaschine liegenden Reihe aus mehreren Verpackungsunterteilen in diese gleichzeitig einzulegen. Damit lassen sich anhand des Pufferbands und/oder anhand des Zuführbands Verpackungsunterteile reihenweise mit Produkten beladen.

Eine Variante sieht vor, dass eine mögliche Komplettbeladung einer quer zur Produktionsrichtung der Verpackungsmaschine verlaufenden Reihe von bereitgestellten Verpackungsunterteilen mittels des Pufferbands gegenüber einer Einzelbeladung der in der Reihe befindlichen Verpackungsunterteile mittels des Roboters priorisiert ansteuerbar ist. Damit ergibt sich für den Roboter ein schonender Betrieb bzw. es lassen sich energieintensive Leistungsspitzen des Roboters reduzieren.

Denkbar wäre es, dass das Transfersystem ein weiteres Pufferband aufweist, auf welchem mittels des Roboters Produkte ablegbar sind, wobei das weitere Pufferband ebenfalls zum Einlegen von darauf mittels des Roboters abgelegten Produkten in entlang der Verpackungsmaschine bereitgestellte Verpackungsunterteile konfiguriert ist. Damit lässt sich die Pufferkapazität erhöhen bzw. auf mehrere Pufferbänder verteilen.

Insbesondere sind die beiden Pufferbänder derart zueinander angeordnet, dass sie dazwischen einen Bereich freilassen, in welchem dem Roboter Verpackungsunterteile zum direkten Einlegen von Produkten bereitgestellt werden. Damit wird zwischen den beiden Pufferbändern für den Roboter ein Arbeitsfenster, ggf. mit variierender Größe, geschaffen, in welchem er direkt Produkte in darin bereitgestellte Verpackungsunterteile einlegen kann.

Vorstellbar wäre es, dass das Transfersystem einen weiteren Roboter aufweist, insbesondere einen Delta-Roboter, der zum Einlegen von Produkten in entlang der Verpackungsmaschine bereitgestellte Verpackungsunterteile und zum Ablegen von Produkten auf das weitere Pufferband konfiguriert ist. Damit lassen sich zwei Roboter-Pufferband-Paare innerhalb des Transfersystems bilden, die jeweils sowohl einen Roboter als auch ein Pufferband aufweisen, die zum Einlegen von Produkten in entlang der Verpackungsmaschine bereitgestellte Verpackungsunterteile genutzt werden können. Gemäß einer derartigen paarweisen Ausbaustufe kann das Transfersystem besonders große Produktmengen pro Zeit verarbeiten, insbesondere stark variierende Produkteinlaufströme kompensieren.

Vorstellbar wäre es, dass beide Pufferbänder als Rückzugsbänder oder als Förderbänder oder als Kombination daraus konfiguriert sind. Denkbar wäre es, dass die Pufferbänder zeitversetzt zum Einlegen darauf mittels des bzw. der Roboter abgelegten Produkte in bereitgestellte Verpackungsunterteile ansteuerbar sind. Beispielsweise wäre es denkbar, dass eines der beiden Pufferbänder während einer Unterbrechung der Vorschubbewegung der Verpackungsmaschine ansteuerbar ist, um darauf abgelegte Produkte in bereitgestellte Verpackungsunterteile einzulegen. Das andere der beiden Rückzugsbänder könnte dagegen während einer Vorschubbewegung der Verpackungsmaschine ansteuerbar sein, um synchron zur Vorschubbewegung Produkte in die bewegten Verpackungsunterteile einzulegen.

Gemäß einer Ausführungsform der Erfindung sind ein- und ausfahrbare Enden der beiden Rückzugsbänder einander zugewandt. Ein derartiger Aufbau kann bspw. dafür genutzt werden, um zwischen den einander zugewandten Enden der Rückzugsbänder ein Arbeitsfenster für den Roboter freizulassen, innerhalb welchem der Roboter zum direkten Einlegen von Produkten einsetzbar ist.

Insbesondere sind beide Rückzugsbänder als solche relativ zum Roboter bzw. zu den jeweiligen Robotern verschiebbar angeordnet. Dies könnte bspw. dafür genutzt werden, um den Einlegebereich des jeweiligen Roboters zu variieren, insbesondere in Abhängigkeit einer erfassten Produktzufuhr.

Die Erfindung betrifft ferner eine Produktionslinie mit einem erfindungsgemäßen Transfersystem sowie mindestens einer Verpackungsmaschine, die in Form einer Tiefziehverpackungsmaschine oder einer Schalenverschließmaschine konfiguriert ist. Das Transfersystem ist dazu konfiguriert, Produkte in entlang der Verpackungsmaschine bereitgestellte Verpackungsunterteile einzulegen. Zu diesem Zwecke kommen ein Roboter sowie ein vom Roboter erreichbares Pufferband des Transfersystems zum Einsatz.

Vorstellbar wäre es, dass innerhalb der Produktionslinie mehrere Verpackungsmaschinen, beispielsweise zwei parallel zueinander angeordnete Tiefziehverpackungsmaschinen, von dem Transfersystem mit Produkten versorgt werden. Dabei könnte der Roboter an beiden Verpackungsmaschinen zum Einsatz kommen und das Transfersystem für die jeweiligen Verpackungsmaschinen mindestens ein Pufferband zum Einlegen von mittels des Roboters darauf abgelegter, zwischengespeicherter Produkte vorsehen. Damit lassen sich zugeführte Produkte anhand des Transfersystems auf die jeweiligen Verpackungsmaschinen verteilen.

Vorzugsweise umfasst die Produktionslinie in Produktionsrichtung stromaufwärts des Transfersystems mindestens eine Schneideinrichtung zum Schneiden der Produkte. Anhand des Transfersystems können regelmäßige und unregelmäßige Produktströme aus der Schneideinrichtung verarbeitet werden, damit sowohl die Schneideinrichtung als auch die Verpackungsmaschine kontinuierlich, insbesondere hinsichtlich eines gewünschten Maschinenarbeitstakts, arbeiten können.

Vorzugsweise ist das Pufferband an einem Maschinenrahmen der Verpackungsmaschine gelagert, insbesondere daran entlang einer Einlegestrecke der Verpackungsmaschine in und entgegen einer Produktionsrichtung der Verpackungsmaschine verschiebbar gelagert.

An der Verpackungsmaschine bildet das Pufferband insbesondere ein oberhalb der Einlegestrecke positioniertes Puffer-Einlegeband aus, welches insbesondere als solches relativ zum Roboter verlagerbar ist.

Die Erfindung betrifft des Weiteren ein Verfahren, bei welchem ein Roboter zum Einlegen von Produkten in entlang mindestens einer Verpackungsmaschine bereitgestellte Verpackungsunterteile eingesetzt wird. Das erfindungsgemäße Verfahren sieht vor, dass ferner mindestens ein Pufferband zum Einlegen darauf mittels des Roboters abgelegten Produkten in entlang der Verpackungsmaschine bereitgestellte Verpackungsunterteile eingesetzt wird.

Demzufolge wird bei der Erfindung das für den Roboter bereitgestellte Pufferband auch als Einlegeband eingesetzt, um die darauf mittels des Roboters abgelegten, zwischengespeicherten Produkte selbst in entlang der Verpackungsmaschine bereitgestellte Verpackungsunterteile einzulegen. Damit erfüllt das erfindungsgemäße Pufferband eine Doppelfunktion, indem es sowohl als Puffer- als auch als Einlegeband zum Einsatz kommt.

Als wesentlicher Vorteil ergibt sich durch das erfindungsgemäße Verfahren, dass der Roboter nicht mehr dafür benötigt wird, um Produkte aus dem Puffer aufzunehmen und in die Verpackungsunterteile zu legen. Vielmehr kann sich seine Arbeit auf das unmittelbare Einlegen von Produkten in bereitgestellte Verpackungsunterteile und auf das Ablegen von Produkten auf das Pufferband beschränken, sodass Produkte nicht mehr mehrmals vom Roboter aufgenommen werden, sondern jedes Produkt nur einmal vom Roboter aufgenommen und abgelegt wird. Damit lässt sich die Verfügbarkeit des Roboters am Produkteinlauf für die zugeführten Produkte erhöhen. Dies begünstigt eine unterbrechungsfreie Produktzufuhr in das Transfersystem sowie einen kontinuierlichen Verpackungsprozess, weil der Roboter nicht mehr zum Freiräumen von belegten Pufferplätzen benötigt wird.

Vorstellbar wäre es, dass ein weiteres Pufferband zum Einlegen darauf mittels des Roboters abgelegten Produkten in entlang der Verpackungsmaschine bereitgestellte Verpackungsunterteile eingesetzt wird. Insbesondere wäre es möglich, dass die beiden Pufferbänder an verschiedenen Verpackungsmaschinen zum Einlegen darauf mittels des Roboters abgelegten Produkten in entlang der jeweiligen Verpackungsmaschinen bereitgestellte Verpackungsunterteile eingesetzt werden.

Die Erfindung wird anhand von in den Figuren gezeigten Ausführungsbeispielen genauer erläutert. Es zeigen:
- Figur 1: Ein Transfersystem für eine Verpackungsmaschine in Form einer Tiefziehverpackungsmaschine,
- Figur 2: ein weiteres Transfersystem für eine Verpackungsmaschine in Form einer Tiefziehverpackungsmaschine,
- Figur 3: ein Transfersystem für eine Verpackungsmaschine in Form einer Tiefziehverpackungsmaschine in perspektivischer Darstellung,
- Figur 4A: ein Transfersystem für eine Verpackungsmaschine in Form einer Schalenverschließmaschine,
- Figur 4B: das Transfersystem aus Figur 4a im laufenden Betrieb,
- Figur 5: eine schematische Draufsichtdarstellung eines Transfersystems für eine Tiefziehverpackungsmaschine,
- Figur 6: ein weiteres Transfersystem in schematischer Draufsichtdarstellung für eine Tiefziehverpackungsmaschine,
- Figur 7: ein weiteres Transfersystem in schematischer Draufsichtdarstellung für eine Tiefziehverpackungsmaschine, und
- Figur 8: ein weiteres Transfersystem in schematischer Draufsichtdarstellung für eine Tiefziehverpackungsmaschine.

Gleiche technische Merkmale sind in den Figuren durchgehend mit denselben Bezugszeichen versehen.

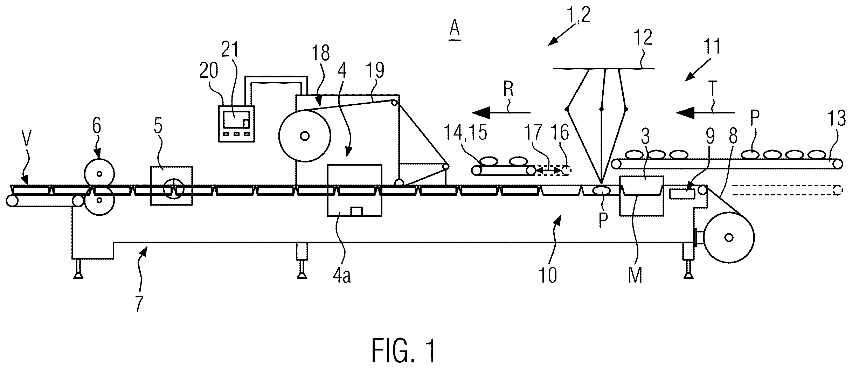

Figur 1 zeigt in schematischer Seitenansicht eine Produktionslinie A mit einer Verpackungsmaschine 1, die als intermittierend arbeitende Tiefziehverpackungsmaschine 2 konfiguriert ist. Diese Tiefziehverpackungsmaschine 2 weist eine Formstation 3, eine Siegelstation 4, eine Querschneidestation 5 und eine Längsschneideeinrichtung 6 auf, die in dieser Reihenfolge in einer Produktionsrichtung R an einem Maschinenrahmen 7 angeordnet sind. Eingangsseitig befindet sich an dem Maschinenrahmen 7 eine Zufuhrrolle, von der eine Folienbahn 8 als Unterfolie abgezogen wird. Ferner weist die Tiefziehverpackungsmaschine 2 eine Transportkette 9 auf, die die Folienbahn 8 ergreift und diese pro Maschinenarbeitstakt in der Produktionsrichtung R weiter transportiert.

In der dargestellten Ausführungsform ist die Formstation 3 als eine Tiefziehstation ausgebildet, bei der in die Folienbahn 8 durch Tiefziehen, bspw. mittels Druckluft und/oder Vakuum, muldenartige Verpackungsunterteile M geformt werden. Dabei kann die Formstation 3 derart ausgebildet sein, dass in der Richtung senkrecht zur Produktionsrichtung R mehrere Verpackungsunterteile M nebeneinander gebildet werden, sprich eine Reihe aus mehreren Verpackungsunterteilen vorliegt.

In Produktionsrichtung R hinter der Formstation 3 ist eine Einlegestrecke 10 vorgesehen, in der die in die Folienbahn 8 geformten Verpackungsunterteile M mit Produkten P befüllt werden.

Das Befüllen der Mulden bzw. Verpackungsunterteile M mit Produkten P wird in Figur 1 mittels eines Transfersystems 11 durchgeführt.

Das Transfersystem 11 weist einen Roboter 12 auf, der von einer Produktzuführung 13 Produkte P aufnimmt und in die hergestellten Verpackungsunterteile M im Bereich der Einlegestrecke 10 einlegt. Ferner verfügt das Transfersystem 11 über ein Pufferband 14, auf welchem mittels des Roboters 12 Produkte P ablegbar sind.

Gemäß Figur 1 wird das Pufferband 14 außer seiner Pufferfunktion auch als Einlegeband genutzt, um selbst darauf abgelegte Produkte P in die Verpackungsunterteile M einlegen zu können. Zu diesem Zwecke ist das Pufferband 14 oberhalb der Einlegestrecke 10 der Tiefziehverpackungsmaschine 2 angeordnet. Das Pufferband 14 aus Figur 1 liegt als Rückzugsband 15 vor, dass längs zur Produktionsrichtung R der Tiefziehverpackungsmaschine 2 ein- und ausfahrbar ist, insbesondere ein in Produktionsrichtung R der Tiefziehverpackungsmaschine 2 einfahrbares Ende 16 aufweist. Ein derartiges Rückzugsband 15 wird in Fachkreisen auch "Pullnose-Band" genannt. Das am in Figur 1 gezeigten Rückzugsband 15 ausgebildete Ende 16 wird mittels eines pneumatischen Hubantriebs 17 ein- und ausgefahren.

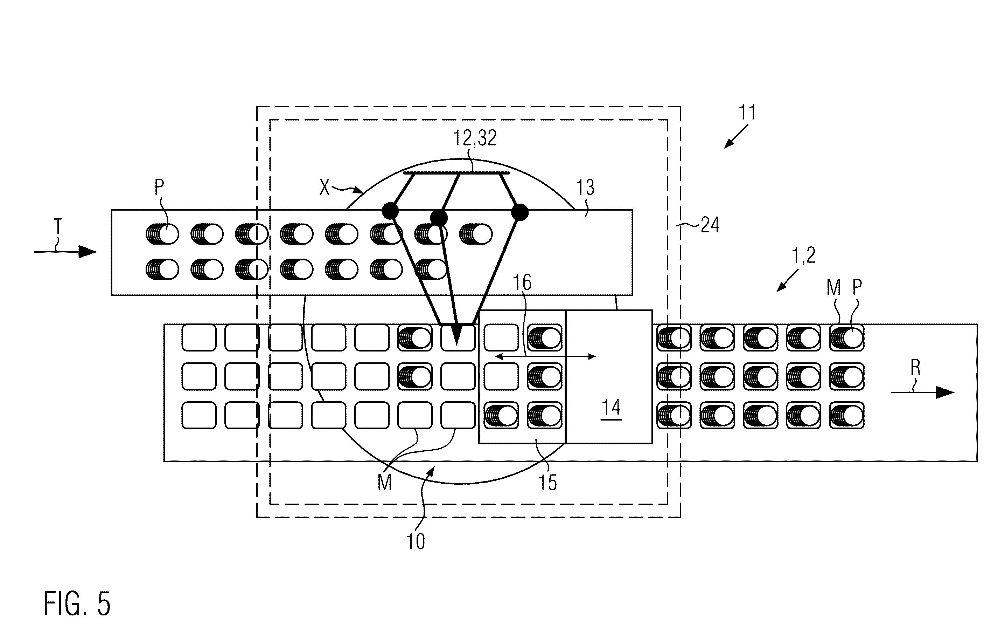

Gemäß Figur 1 liegt die Produktzuführung 13 als Zuführ- und Einlegeband vor, das oberhalb der Einlegestrecke 10 endet, um die aus der Formstation 3 heraustransportierten Verpackungsunterteile M mit Produkten P befüllen zu können. Alternativ zu dieser Anordnung, was durch die gestrichelte Darstellung der Produktzuführung 13 gezeigt wird, kann die Produktzuführung 13 tiefer gelagert und neben der Verpackungsmaschine 1, insbesondere neben der Einlegestrecke 10, beispielsweise bis zum Pufferband 14 (siehe Figur 5), verlaufen, um lediglich als Produktzuführung 13 für den Roboter 12 genutzt zu werden, sprich ohne dabei selbst eine Einlegefunktion zu bieten.

Die Siegelstation 4 verfügt über eine hermetisch verschließbare Kammer 4a, in der die Atmosphäre in den muldenartigen Verpackungsunterteilen M vor dem Versiegeln mit einer von einer Oberfolienaufnahme 18 abgegebenen Folienbahn 19, z.B. evakuiert und/oder durch Gasspülen mit einem Austauschgas oder mit einem Gasgemisch, ersetzt werden kann.

Die Querschneideeinrichtung 5 kann als Stanze ausgebildet sein, die die versiegelten Folienbahnen 8, 12 in einer Richtung quer zur Produktionsrichtung R zwischen benachbarten Verpackungsunterteilen M durchtrennt. Dabei arbeitet die Querschneideeinrichtung 5 derart, dass die Folienbahn 8 nicht über die gesamte Breite aufgetrennt wird, sondern zumindest in einem Randbereich nicht durchtrennt wird. Dies ermöglicht einen kontrollierten Weitertransport durch die Transportkette 9.

Die Längsschneideeinrichtung 6 kann als eine Messereinrichtung ausgebildet sein, mit der die versiegelten Folienbahnen 8, 12 zwischen benachbarten Mulden M und am seitlichen Rand der als Unterfolie gebildeten Folienbahn 8 in der Produktionsrichtung R durchtrennt werden, sodass hinter der Längsschneideeinrichtung 6 vereinzelte Verpackungen V vorliegen.

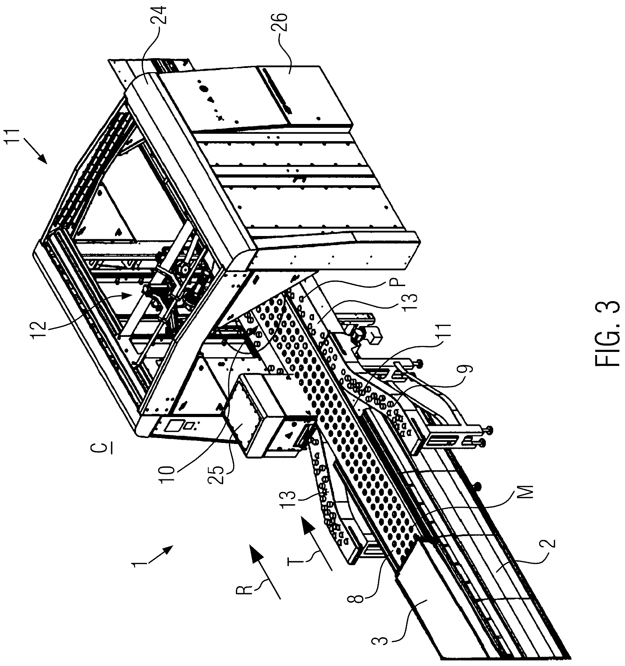

Die Tiefziehverpackungsmaschine 2 verfügt ferner über eine Steuereinrichtung 20. Sie hat die Aufgabe, die in der Tiefziehverpackungsmaschine 2 ablaufenden Prozesse zu steuern und zu überwachen. Eine Anzeigeeinrichtung 21 dient zum Visualisieren bzw. Beeinflussen der Prozessabläufe in der Tiefziehverpackungsmaschine 2 für bzw. durch einen Bediener. Denkbar ist es, dass das Transfersystem 11 mit der Steuereinrichtung 20 verbunden ist, sodass sich die jeweiligen Komponenten des Transfersystems 11 anhand der Steuereinrichtung 20 steuern lassen. Alternativ dazu kann das Transfersystem 11 auch eine eigene Steuerung 26 aufweisen (siehe Figur 3).

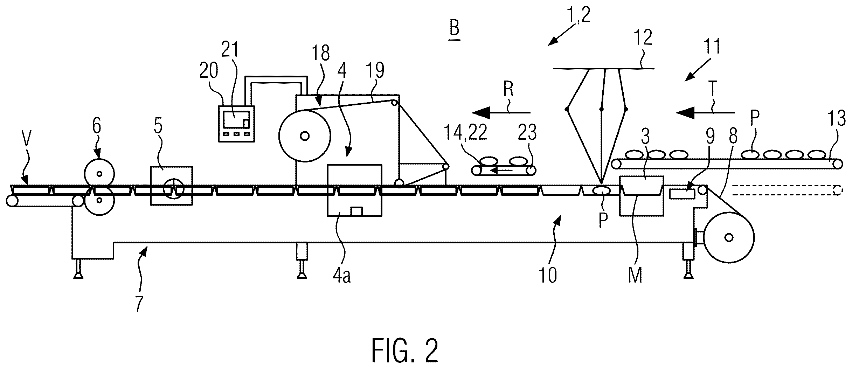

Figur 2 zeigt in schematischer Seitenansicht eine Produktionslinie B, wobei das darin eingesetzte Transfersystem 11 sich von dem in Figur 1 gezeigten Transfersystem 11 dadurch unterscheidet, dass es als Pufferband 14 anstelle des Rückzugsbands 15 ein gewöhnliches Förderband 22 aufweist. Das Förderband 22 ist insbesondere dazu ausgebildet, darauf mittels des Roboters 12 zwischengespeicherte Produkte P in Produktionsrichtung R zu transportieren, um bei Bedarf die darauf zwischengespeicherten Produkte P in die entlang der Tiefziehverpackungsmaschine 2 bereitgestellten Verpackungsunterteile bzw. Mulden M einzulegen. Das in Figur 2 gezeigte Förderband 22 wird mittels eines Servomotors 23 angetrieben, insbesondere synchron zu einer Vorschubbewegung der Tiefziehverpackungsmaschine 2, um Produkte P in die entlang der Tiefziehverpackungsmaschine 2 bereitgestellten Verpackungsunterteile bzw. Mulden M einzulegen.

Für den Fall, dass die in Figur 2 gezeigte Produktzuführung 13 gemäß der gestrichelten Darstellung weiter unten und neben der Einlegestrecke 10 verläuft, könnte das in Figur 2 gezeigte Pufferband 14 auch derart oberhalb der Formstation 3 positioniert sein, dass es anstelle der Produktzuführung 13 oberhalb der Einlegestrecke 10 endet, um die aus der Formstation 3 heraustransportierten Verpackungsunterteile M mit Produkten P befüllen zu können.

Figur 3 zeigt in schematischer Seitenansicht eine Produktionslinie C, insbesondere ausschnittsweise die darin eingesetzte Tiefziehverpackungsmaschine 2 in perspektivischer Darstellung. Die Tiefziehverpackungsmaschine 2 weist zu Beginn, in der Figur 3 linksseitig, die Formstation 3 auf, in der in die Folienbahn 8 Verpackungsunterteile bzw. Mulden M geformt werden, in die die Produkte P eingelegt werden. Oberhalb der Einlegestrecke 10 ist ein Portal 24 mit dem Roboter 12 angeordnet, um die Produkte P von der Produktzuführung 13 aufzunehmen und in die Verpackungsunterteile M einzulegen.

In Produktionsrichtung R stromaufwärts der Einlegestrecke 10 ist ein Visionsystem 25 für die Produktzuführung 13 angeordnet, um die Position und/oder die Menge der Produkte P auf der Produktzuführung 13 zu erfassen. Angesichts der erfassten Werte wird mittels der Steuerung 26 der Roboter 12 entsprechend angesteuert, damit er die Produkte P sicher von der Produktzuführung 13 aufnehmen und lagegenau in die Verpackungsunterteile M einlegen kann. Ein weiteres Visionsystem 25 auf der gegenüberliegenden Produktzuführung 13 ist zur besseren Darstellung nicht gezeigt. Nicht näher in der Figur 3 dargestellt sind die nach der Einlegestrecke 10 stromabwärts folgenden Arbeitsstationen, nämlich die Siegelstation 4 zum Aufbringen der Folienbahn 19, die Querschneidestation 5 sowie die Längsschneideeinrichtung 6. Außerdem wird in Figur 3 das oberhalb der Einlegestrecke 10 angeordnete Pufferband 14 des Transfersystems 11 vom Portal 24 bedeckt, sodass es nicht zu sehen ist.

Die Produktionsrichtung R der Folienbahn 8 ist gemäß Figur 3 gleichgerichtet mit einer Transportrichtung T der Produkte P auf der Produktzuführung 13, also im Gleichlauf. Es ist ebenso denkbar, dass die Produktzuführung 13 im Gegenlauf die Produkte P der Einlegestrecke 10 zuführt.

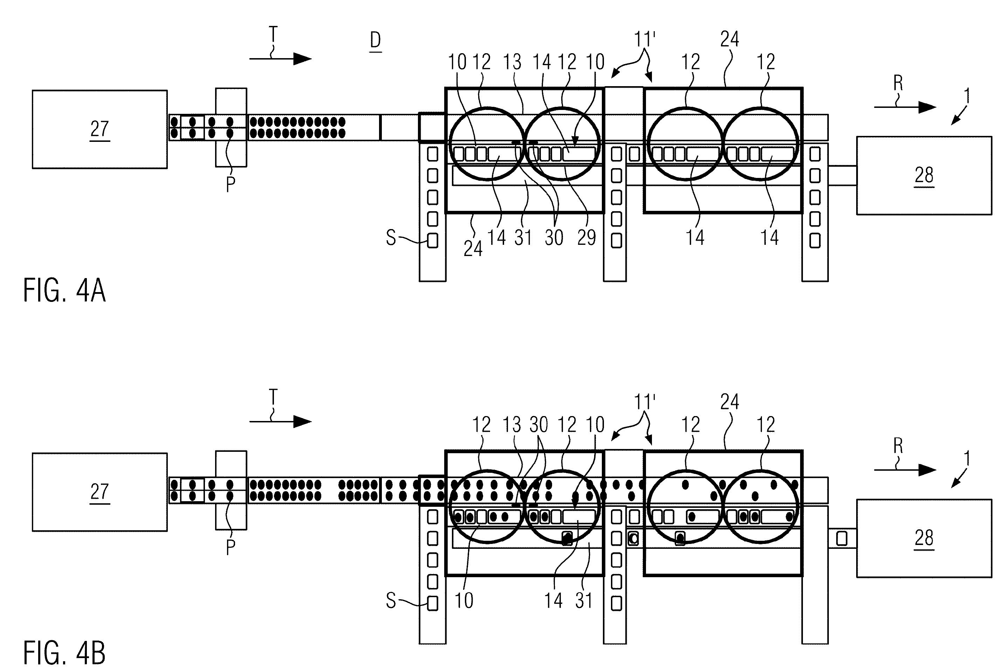

Figur 4A zeigt eine Produktionslinie D mit einer Schneideinrichtung 27 zum Schneiden der Produkte P, einem Transfersystem 11' zum Einlegen der Produkte P in bereitgestellte, schalenförmige Verpackungsunterteile S sowie eine Verpackungsmaschine 1, die in Form einer Schalenverschließmaschine 28 vorliegt, die in dieser Reihenfolge in Produktionsrichtung R hintereinander angeordnet sind.

Die anhand der Schneideinrichtung 27 geschnittenen Produkte P werden gemäß Figur 4A in Produktionsrichtung R über die Produktzuführung 13 in einen Arbeitsbereich des Transfersystems 11' transportiert. Innerhalb des Arbeitsbereichs des Transfersystems 11' können die zugeführten Produkte P mittels der darin angeordneten Roboter 12 von der Produktzuführung 13 aufgenommen und in die bereitgestellten Verpackungsunterteile S gelegt werden. Die Verpackungsunterteile S werden entlang der Einlegestrecke 10 mittels einer Schalenzuführung 29 bereitgestellt.

Ferner zeigt Figur 4A, dass in Reichweite der jeweiligen Roboter 12 oberhalb der Einlegestrecke 10 Pufferbänder 14 angeordnet sind, auf welchen sich mittels der Roboter 13 Produkte P ablegen lassen. Diese Pufferbänder 14 sind dazu in der Lage, darauf zwischengespeicherte Produkte P in die entlang der Einlegestrecke 10 bereitgestellten Verpackungsuntersteile S einzulegen, kommen mithin als Einlegebänder zum Einsatz.

Das Transfersystem 11' aus Figur 4A verfügt über eine Pusher-Einheit 30, die dazu dient, mit Produkt P beladene Verpackungsunterteile S von der Schalenzuführung 29 auf ein Abführband 31 quer zur Produktionsrichtung R zu schieben. Das Abführband 31 bildet gemäß Figur 4A gleichzeitig eine Zuführung für die stromabwärts positionierte Schalenverschließmaschine 28 aus, innerhalb welcher sich die mit Produkt P beladenen Verpackungsunterteile S mit einer Oberfolie verschließen lassen.

Figur 4B zeigt die Produktionslinie D im fortgeschritten Betrieb, wobei Produkte P bereits mittels des Transfersystems 11' verladen werden. Insbesondere ist in Figur 4B zu sehen, dass Produkte P sowohl mittels der Roboter 12 direkt in die entlang der Einlegestrecke 10 bereitgestellten Verpackungsunterteile S eingelegt werden, als auch auf Pufferbändern 14 zwischengespeichert werden, beispielsweise um einen Overflow an Produkten P abzufangen. Die auf den Pufferbändern 14 zwischengespeicherten Produkte P werden von diesen bei Bedarf, beispielsweise bei verlangsamter Produktzufuhr, in bereitgestellte Verpackungsunterteile S eingelegt.

Im Transfersystem 11' werden damit sowohl die jeweiligen Roboter 12 als auch die jeweiligen Pufferbänder 14 zum Einlegen von zugeführten Produkten bzw. zum Einlegen zwischengespeicherter Produkte P in bereitgestellte Verpackungsunterteile S eingesetzt.

Figur 5 zeigt das Transfersystem 11 in schematischer Draufsicht zum Versorgen der Tiefziehverpackungsmaschine 2 mit Produkten P. Das Transfersystem 11 benutzt sowohl den Roboter 12, der als Delta-Roboter 32 vorliegt, zum Einlegen der Produkte P in die bereitgestellten Verpackungsunterteile bzw. Mulden M, als auch das Pufferband 14, das gemäß Figur 5 als Rückzugsband 15 vorliegt, um darauf zwischengespeicherte Produkte P, d.h. Produkte P, die mittels des Roboters 13 auf dem Pufferband 14 abgelegt worden sind, in die Mulden M einzulegen.

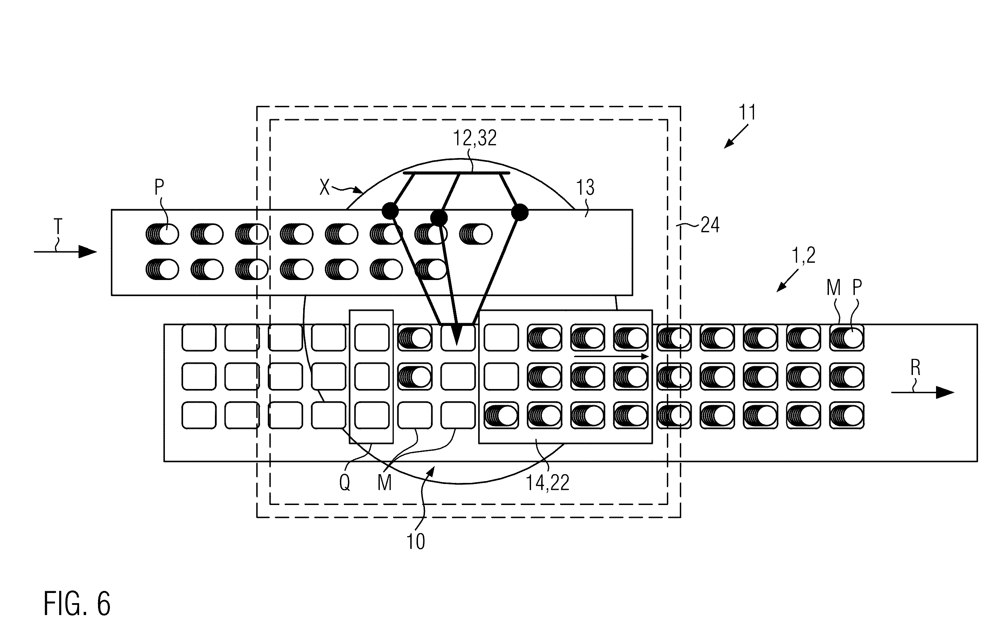

In Figur 6 ist im Transfersystem 11 als Pufferband 14 das Förderband 22 vorgesehen, welches dazu konfiguriert ist, darauf mittels des Roboters 12 abgelegte Produkte P in Produktionsrichtung R zu fördern, um sie in die darunter entlang der Einlegestrecke 10 bereitgestellten Mulden M einzulegen.

Das Förderband 22 kann derart anhand des Roboters 12 beladen werden, dass es für eine Komplettbeladung einer quer zur Produktionsrichtung R verlaufenden Reihe Q aus mehreren Verpackungsunterteilen M ansteuerbar ist, sobald die Reihe Q ein Ende des Förderbands 22 erreicht. Die Reihe Q lässt sich dafür am Roboter 12 leer vorbei transportieren, ohne dabei von ihm beladen zu werden.

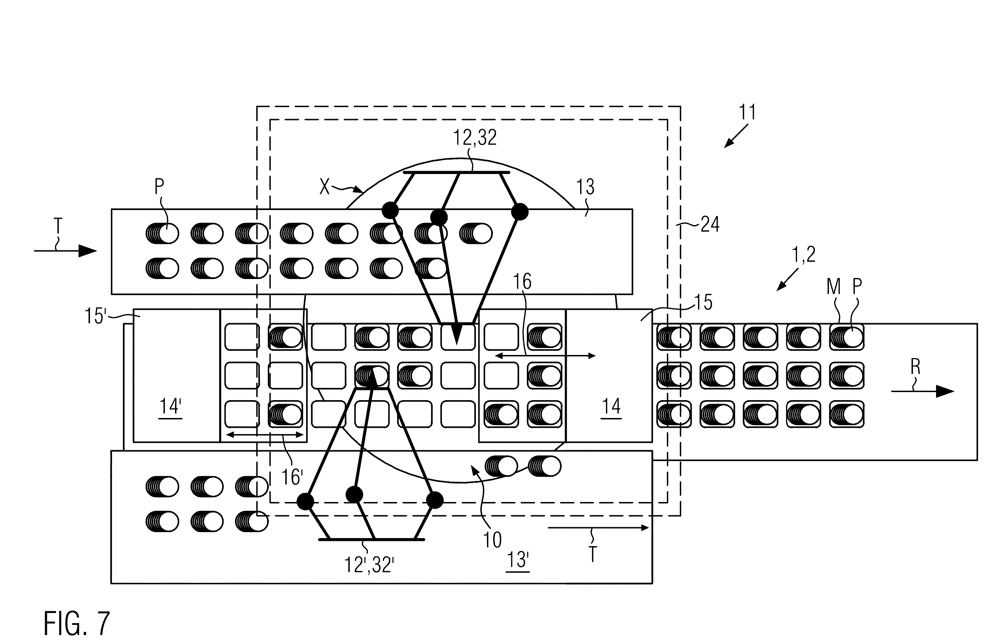

Figur 7 zeigt, dass das Transfersystem 11 ein weiteres Pufferband 14' aufweist, auf welchem sich mittels eines weiteren Roboters 12' Produkte P ablegen lassen. Das weitere Pufferband 14' ist ebenfalls zum Einlegen von darauf mittels des Roboters 12' abgelegten Produkten P in entlang der Tiefziehverpackungsmaschine 2 bereitgestellte Verpackungsunterteile M konfiguriert.

Gemäß Figur 7 liegt das weitere Pufferband 14' auch als Rückzugsband 15' vor, dass ebenfalls ein ein- und ausfahrbares Ende 16' aufweist. Ferner zeigt Figur 7, dass der weitere Roboter 12' Produkte P von einer der Produktzuführung 13 gegenüberliegenden Produktzuführung 13' erhält. Die weitere Produktzuführung 13' führt die Produkte P ebenfalls in Transportrichtung T dem Transfersystem 11 zu.

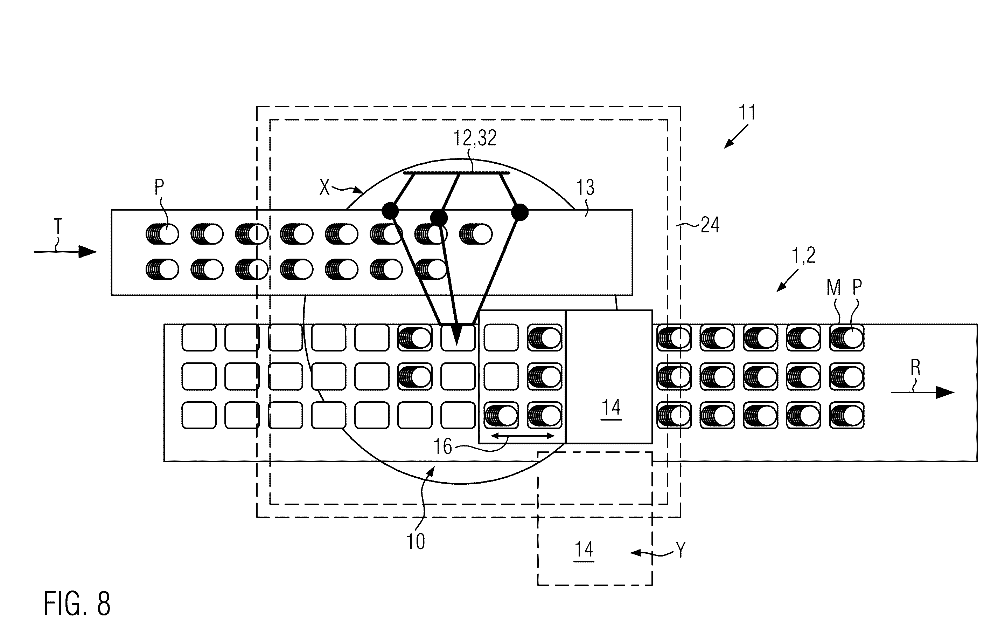

Figur 8 zeigt in schematischer Draufsicht, dass sich das Pufferband 14 aus einem Arbeitsbereich X des Roboters 12 heraus in eine Zone Y bewegen lässt, damit dem Roboter 12 ein maximaler Arbeitsbereich X zur Verfügung steht, um Produkte P direkt in bereitgestellte Verpackungsunterteile bzw. Mulden M einzulegen.

## Patentansprüche

1. Transfersystem (11, 11') für eine Verpackungsmaschine (1), wobei das Transfersystem (11, 11') mindestens einen Roboter (12), der zum Einlegen von Produkten (P) in entlang der Verpackungsmaschine (1) bereitgestellte Verpackungsunterteile (M, S) konfiguriert ist, sowie mindestens ein für den Roboter (12) erreichbares Pufferband (14) aufweist, auf welchem mittels des Roboters (12) Produkte (P) ablegbar sind, **dadurch gekennzeichnet, dass** das Pufferband (14) zum Einlegen von darauf mittels des Roboters (12) abgelegten Produkten (P) in entlang der Verpackungsmaschine (1) bereitgestellte Verpackungsunterteile (M, S) konfiguriert ist.

2. Transfersystem nach Anspruch 1, **dadurch gekennzeichnet, dass** das Pufferband (14) als Einlegeband oberhalb einer Einlegestrecke (10) der Verpackungsmaschine (1) angeordnet ist.

3. Transfersystem nach Anspruch 1 oder 2, **dadurch gekennzeichnet, dass** das Pufferband (14) anhand eines pneumatischen Hubantriebs (17), mittels eines Elektromotors oder mittels eines Servomotors (23) zum Einlegen von Produkten (P) antreibbar ist.

4. Transfersystem nach einem der vorangehenden Ansprüche, **dadurch gekennzeichnet, dass** das Pufferband (14) als solches relativ zum Roboter (12) verschiebbar angeordnet ist, insbesondere als solches aus einer Reichweite des Roboters (12) heraus verschiebbar angeordnet ist.

5. Transfersystem nach einem der vorangehenden Ansprüche, **dadurch gekennzeichnet, dass** der Roboter (12) als Delta-Roboter (32) ausgebildet ist.

6. Transfersystem nach einem der vorangehenden Ansprüche, **dadurch gekennzeichnet, dass** das Transfersystem (11, 11') für den Roboter (12) mindestens eine Produktzuführung (13) aufweist.

7. Transfersystem nach einem der vorangehenden Ansprüche, **dadurch gekennzeichnet, dass** das Pufferband (14) ein Rückzugsband (15) oder ein Förderband (22) ist.

8. Transfersystem nach Anspruch 7, **dadurch gekennzeichnet, dass** das Rückzugsband (15) längs zu einer Produktionsrichtung (R) der Verpackungsmaschine (1) ein- und ausfahrbar ist, insbesondere ein in Produktionsrichtung (R) der Verpackungsmaschine (1) einfahrbares Ende (16) aufweist.

9. Transfersystem nach Anspruch 7 oder 8, **dadurch gekennzeichnet, dass** das Rückzugsband (15) als doppelseitiges Rückzugsband mit gegenüberliegenden ein- und ausfahrbaren Enden (16) konfiguriert ist.

10. Transfersystem nach einem der vorangehenden Ansprüche, **dadurch gekennzeichnet, dass** das Transfersystem (11, 11') ein weiteres Pufferband (14') aufweist, auf welchem mittels des Roboters (12) Produkte (P) ablegbar sind, wobei das weitere Pufferband (14') ebenfalls zum Einlegen von darauf mittels des Roboters (12) abgelegten Produkten (P) in entlang der Verpackungsmaschine (1) bereitgestellte Verpackungsunterteile (M, S) konfiguriert ist.

11. Transfersystem nach Anspruch 10, **dadurch gekennzeichnet, dass** das Transfersystem (11, 11') einen weiteren Roboter (12') aufweist, insbesondere einen Delta-Roboter (32'), der zum Einlegen von Produkten (P) in entlang der Verpackungsmaschine (1) bereitgestellte Verpackungsunterteile (M, S) und zum Ablegen von Produkten (P) auf das weitere Pufferband (14') konfiguriert ist.

12. Produktionslinie (A, B, C, D) mit einem Transfersystem (11, 11') nach einem der vorangehenden Ansprüche sowie mindestens einer Verpackungsmaschine (1), die in Form einer Tiefziehverpackungsmaschine (2) oder einer Schalenverschließmaschine (28) konfiguriert ist.

13. Produktionslinie nach Anspruch 12, **dadurch gekennzeichnet, dass** die Produktionslinie (A, B, C, D) in Produktionsrichtung (R) stromaufwärts des Transfersystems (11, 11') mindestens eine Schneideinrichtung (27) zum Schneiden der Produkte (P) aufweist und/oder das Pufferband (14) an einem Maschinenrahmen (7) der Verpackungsmaschine (1) gelagert ist, insbesondere daran entlang eines Einlegebereichs (10) der Verpackungsmaschine (1) in Produktionsrichtung (R) der Verpackungsmaschine (1) verschiebbar gelagert ist.

14. Verfahren, bei welchem ein Roboter (12) zum Einlegen von Produkten (P) in entlang mindestens einer Verpackungsmaschine (1) bereitgestellte Verpackungsunterteile (M, S) eingesetzt wird, **dadurch gekennzeichnet, dass** ferner mindestens ein Pufferband (14) zum Einlegen darauf mittels des Roboters (12) abgelegten Produkten (P) in entlang der Verpackungsmaschine (1) bereitgestellte Verpackungsunterteile (M, S) eingesetzt wird.

15. Verfahren nach Anspruch 14, **dadurch gekennzeichnet, dass** ferner ein weiteres Pufferband (14') zum Einlegen darauf mittels des Roboters (12) abgelegten Produkten (P) in entlang der Verpackungsmaschine (1) bereitgestellte Verpackungsunterteile (M, S) eingesetzt wird.
